# EUROPEAN PATENT APPLICATION

(11) **EP 1 705 403 A2**
(43) Date of publication of application: **27.09.2006**
(21) Application number: 06111316.3
(22) Date of filing: 17.03.2006
(51) Int. Cl.: F16H 25/22

(54) **Electrically driven linear actuator**

(30) Priority: 22.03.2005 JP 2005081815
(71) Applicant: NTN CORPORATION, Osaka (JP)
(72) Inventor: Tateishi, Koji, Shizuoka-ken (JP)
(74) Representative: Cohausz & Florack

(57) **Abstract**

Electrically driven linear actuator which can suppress generation of vibration or noise even if the alternating load or vibratory load would be applied to the actuator. Electrically driven linear actuator comprising an electric motor (5) mounted on a housing; a screw shaft (7) coaxially connected to a motor shaft (5a) of the electric motor (5) and formed on its outer circumferential surface with a screw groove (7a); a nut (8) threadably engaged with the screw shaft (7), having a pair of supporting shafts (12) on the outer circumferential surface of the nut (8) supporting one end of a link (2) and formed on its inner circumferential surface with a screw groove (8a) corresponding to the screw groove (7a) of the screw shaft (7); a number of balls (9) contained between the screw grooves (7a,8a); ball circulating members (14) each being formed with an endless ball circulating passage (15) between the screw grooves (7a,8a); a ball screw (3) for converting a rotary motion of the electric motor (5) to an axial motion of the nut (8) and causing a swing motion of the link (2) via the supporting shafts (12); and a pair of supporting bearings (10,11;22,11) for supporting the screw shaft (7) rotatably but axially immovably relative to the housing (4), one supporting bearing (10,22) arranged at a side of the electric motor (5) of each pair of the supporting bearing is an angular ball bearing and the other supporting bearing (11) is a sliding bearing.

## Description

### BACKGROUND OF THE INVENTION

### Field of the Invention

The present invention relates to an electrically driven linear actuator used in driving train such as a brake, engine or transmission of an automobile, and more particularly to an electrically driven linear actuator for converting a rotary motion of an electric motor to a linear motion via a ball screw mechanism.

### Description of Background Art

In the electrically driven linear actuator used in many kinds of driving mechanisms of a vehicle such as an automobile etc, it is usually used a gear mechanism comprising a trapezoidal screw thread or a rack and pinion as a mechanism for converting the rotary motion of the electric motor to the linear motion in an axial direction. These converting mechanisms usually have sliding contact portions and thus a defect of power loss. This requires increase of power of the electric motor and thus is obliged to increase the power consumption. Accordingly, a ball screw mechanism has been increasingly used as a more efficient actuator.

Heretofore, in such an electrically driven linear actuator, a line of action of the driving side coincides with an axis of the ball screw and thus a pure axial load is applied to the ball screw. However, if the load applied to the ball screw is not the pure axial load, an appropriate means such as a linear guide has been used for preventing the load from being directly applied to the ball screw.

There is a relatively large space in an industrial machine used in a general purpose and thus a large degree of freedom for an arrangement and a size of structural parts of the electrically driven linear actuator. On the contrary, the space and the degree of freedom for mounting the electrically driven actuator are strictly limited in case of an engine compartment an automobile and thus it is very difficult to incorporate therein the electrically driven linear actuator structured so that only pure axial load is applied to the ball screw.

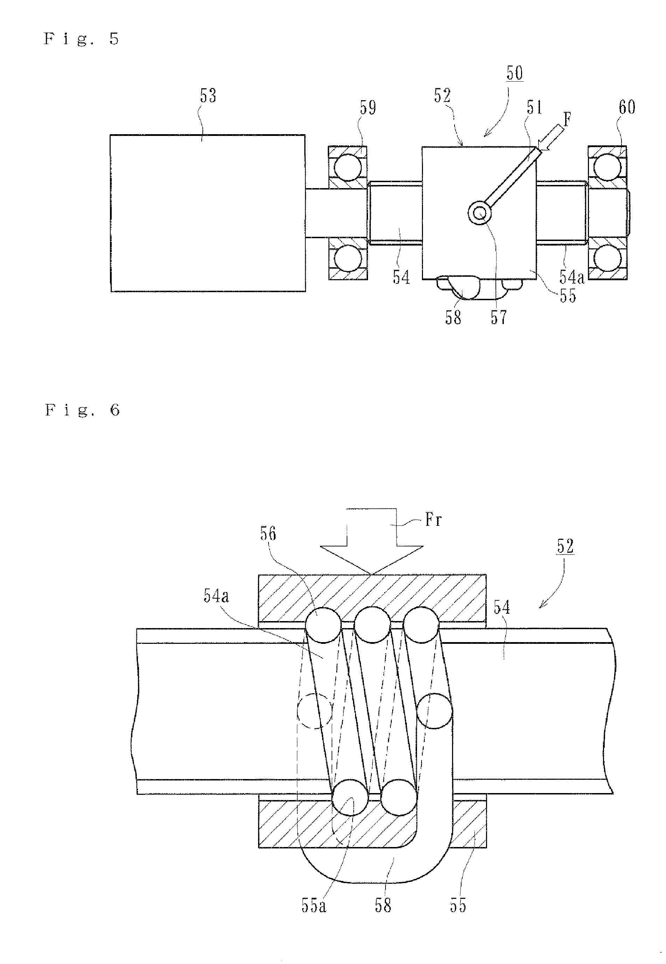

For solving such a problem there has been known an electrically driven linear actuator shown in Fig. 5. This electrically driven linear actuator 50 generally comprises a pair of links 51, a ball screw 52 for swingably driving a driven member via the links 51, and an electric motor 53 for driving the ball screw 52.

As shown in Fig. 6, the ball screw 52 comprises a screw shaft 54 rotationally driven by the electric motor 53, a nut 55 formed on its inner circumferential surface with a helical screw groove 55a corresponding to the screw groove 54a formed on the outer circumferential surface of the screw shaft 54, and a number of balls 56 contained between the screw grooves 54a and 55a. A supporting shaft 57 for pivotably supporting the link 51 at its one end is mounted on the nut 55 as shown in Fig. 5. The supporting shaft 57 is arranged so that it passes through the center of gravity of the nut 55 and perpendicularly to the axis of the screw shaft 54.

The ball screw 52 also comprises a return tube58 (see Fig. 6) as a ball circulating member forming an endless circulating passage for circulating balls 56 between the screw grooves 54a and 55a. The return tube 58 is mounted on the nut 55 at a side (a lower side in Fig. 6) opposite to a side (an upper side in Fig. 6) on which a radial component force "Fr" of a load "F" acting on the nut 55 via the supporting shaft 57 acts.

Thus it is possible to arrange a larger number of balls 56 at the upper side of the nut 55 in Fig. 6 than that present at the lower side of the nut 55 in Fig. 6 and thus possible to prevent the reduction of life of the ball screw 52 which would be caused by the radial component force "Fr" of a load "F" acting on the nut 55 via the supporting shaft 57 (see e.g. Japanese Laid-open Patent Publication No. 84827/2004).

In such an electrically driven linear actuator 50 of the prior art, the screw shaft 54 of the ball screw 52 is supported by a pair of deep groove ball bearings 59, 60. However, it is a problem of the ball screw 52 of the electrically driven linear actuator 50 of the prior art that vibration or noise would be often caused by alternating load or vibratory load as a reaction force from the point of force application.

### SUMMARY OF THE INVENTION

It is, therefore, an object of the present invention to provide an electrically driven linear actuator which can suppress generation of vibration or noise even if the alternating load or vibratory load would be applied to the electrically driven linear actuator.

For achieving the object, there is provided, according to the present invention of claim 1, an electrically driven linear actuator comprising an electric motor mounted on a housing; a screw shaft coaxially connected to a motor shaft of the electric motor and formed on its outer circumferential surface with a screw groove; a nut threadably engaged with the screw shaft, having a pair of supporting shafts on the outer circumferential surface of the nut supporting one end of a link and formed on its inner circumferential surface with a screw groove corresponding to the screw groove of the screw shaft; a number of balls contained between the screw grooves; ball circulating members each being formed with an endless ball circulating passage between the screw grooves; a ball screw for converting a rotary motion of the electric motor to an axial motion of the nut and causing a swing motion of the link via the supporting shafts; and a pair of supporting bearings for supporting the screw shaft rotatably but axially immovably relative to the housing; characterized in that one supporting bearing arranged at a side of the electric motor of each pair of the supporting bearing is an angular ball bearing and the other supporting bearing is a sliding bearing.

According to the present invention of claim 1, since one supporting bearing arranged at a side of the electric motor of each pair of the supporting bearing is an angular ball bearing and the other supporting bearing is a sliding bearing, it is possible to suppress the angular run-out of supporting bearing at the side obliged to be loaded by the axial load even if the alternating load or vibratory load would be applied to the electrically driven linear actuator. In addition, since the sliding bearing has high rigidity and can accept the elongation of the screw shaft which would be caused by temperature rise during driving of a vehicle, it is possible to further effectively absorb the vibration.

Preferably, a light preload is applied to the ball screw as defined in claim 2. This enables to suppress increase of the rotational torque of the ball screw and the temperature rise as well as to suppress generation of vibration or noise even if the alternating load or vibratory load would be applied to the electrically driven linear actuator.

The angular ball bearing may be a double row angular ball bearing as defined in claim 3, the angular ball bearing may be a four-point contact ball bearing as defined in claim 4.

If a chamfered surface is formed between the outer circumferential surface of the screw shaft on which the screw groove is formed and a journal supported by the sliding bearing as having an inclined surface 45° or less than 45° relative to said outer circumferential surface of the screw shaft as defined in claim 5, the difference in diameter of said outer circumferential surface of the screw shaft and the journal can be reduced. Thus a single coil can be used both for induction hardening the screw groove and the journal and accordingly it is possible to reduce the steps of heat treatment and thus manufacturing cost.

### Effects of the invention

The electrically driven linear actuator of the present invention comprises an electric motor mounted on a housing; a screw shaft coaxially connected to a motor shaft of the electric motor and formed on its outer circumferential surface with a screw groove; a nut threadably engaged with the screw shaft, having a pair of supporting shafts on the outer circumferential surface of the nut supporting one end of a link and formed on its inner circumferential surface with a screw groove corresponding to the screw groove of the screw shaft; a number of balls contained between the screw grooves; ball circulating members each being formed with an endless ball circulating passage between the screw grooves; a ball screw for converting a rotary motion of the electric motor to an axial motion of the nut and causing a swing motion of the link connected via the supporting shafts; and a pair of supporting bearings for supporting the screw shaft rotatably but axially immovably relative to the housing; and is characterized in that one supporting bearing arranged at a side of the electric motor of each pair of the supporting bearing is an angular ball bearing and the other supporting bearing is a sliding bearing. Accordingly, it is possible to suppress the angular run-out of the supporting bearing at the side obliged to be loaded by the axial load and thus to suppress generation of vibration or noise even if the alternating load or vibratory load would be applied to the electrically driven linear actuator. In addition, since the sliding bearing has high rigidity and can accept the elongation of the screw shaft which would be caused by temperature rise during driving of a vehicle, it is possible to further effectively absorb the vibration.

### Best mode for carrying out the present invention

Best mode for carrying out the present invention is an electrically driven linear actuator comprising an electric motor mounted on a housing; a screw shaft coaxially connected to a motor shaft of the electric motor and formed on its outer circumferential surface with a screw groove; a nut threadably engaged with the screw shaft, having a pair of supporting shafts on the outer circumferential surface of the nut supporting one end of a link and formed on its inner circumferential surface with a screw groove corresponding to the screw groove of the screw shaft; a number of balls contained between the screw grooves; ball circulating members each being formed with an endless ball circulating passage between the screw grooves; a ball screw for converting a rotary motion of the electric motor to an axial motion of the nut and causing a swing motion of the link via the supporting shafts; and a pair of supporting bearings for supporting the screw shaft rotatably but axially immovably relative to the housing; characterized in that one supporting bearing arranged at a side of the electric motor of each pair of the supporting bearing is an angular ball bearing and the other supporting bearing is a sliding bearing and a chamfered surface is formed between the outer circumferential surface of the screw shaft on which the screw groove is formed and a journal supported by the sliding bearing as having an inclined surface 45° or less than 45°.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view showing first embodiment of the electrically driven linear actuator of the present invention;
Fig. 2 (a) is a longitudinal section view of a ball screw of Fig. 1, and Fig. 2 (b) is a perspective view of a bridge member of Fig. 2 (a);
Fig. 3 is an partially enlarged view of a screw shaft of the present invention;
Fig. 4 is a longitudinal section view showing a second embodiment of the electrically driven linear actuator of the present invention;
Fig. 5 is a partially sectioned front elevation view of an electrically driven linear actuator of the prior art; and
Fig. 6 is a longitudinal section view of a ball screw of Fig. 5.

### DESCRIPTION OF THE PREFERRED EMBODIMENTS

### First embodiment

Preferred embodiments of the present invention will be described with reference to the accompanying drawings.

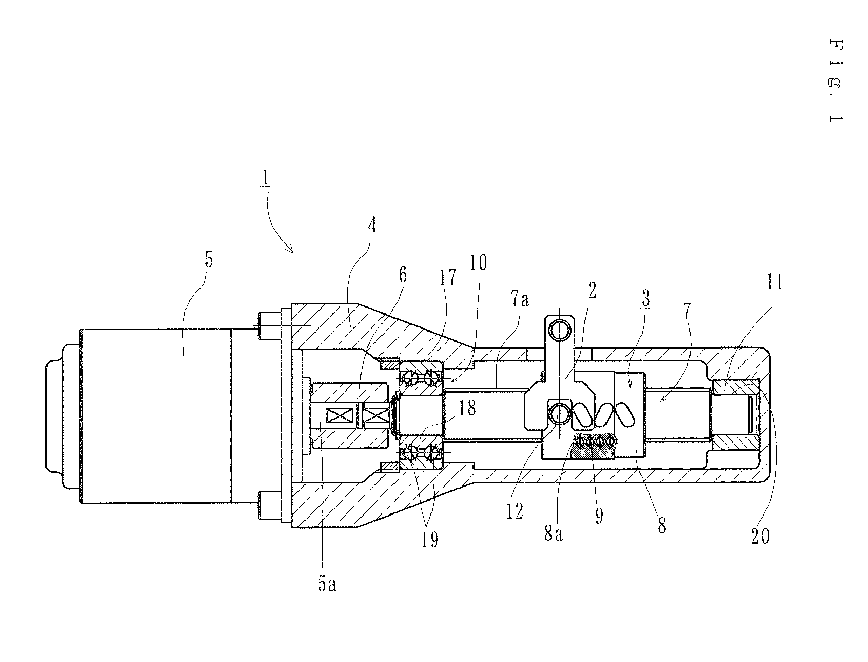

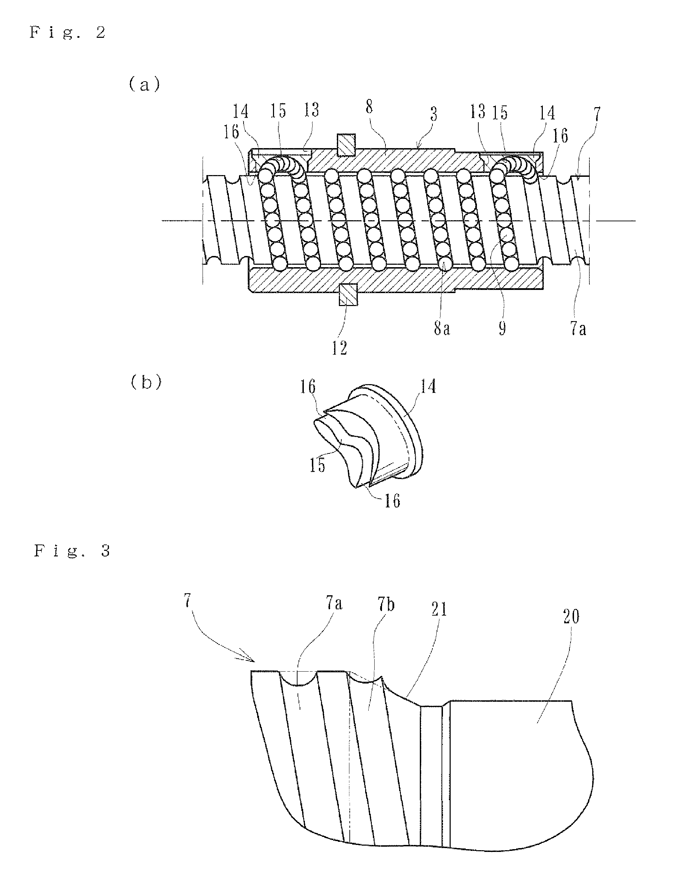

Fig. 1 is a longitudinal section view showing a first embodiment of the electrically driven linear actuator of the present invention, Fig. 2 (a) is a longitudinal section view of a ball screw of Fig. 1, Fig. 2 (a) is a longitudinal section view of a ball screw of Fig. 1, Fig. 2 (b) is a perspective view of a bridge member of Fig. 2 (a), and Fig. 3 is an partially enlarged view of a screw shaft of the present invention.

The electrically driven linear actuator 1 comprises a link 2, a ball screw 3 for swingably driving a driven member (not shown) via the link 2, and an electric motor 5 mounted on a housing 4 for driving a screw shaft 7.

The ball screw 3 is coaxially connected to a motor shaft 5a of the electric motor 5 via a coupling 6. As shown in Fig. 2 (a), the ball screw 3 comprises a screw shaft 7 formed on its outer circumferential surface with a screw groove 7a, a nut 8 formed on its inner circumferential surface with a screw groove 8a corresponding to the screw groove 7a of the screw shaft 7, and a number of balls 9 contained between the screw grooves 7a and 8a. The cross-sectional configuration of the screw grooves 7a and 8a may be either the circular arc or the Gothic arc configuration. However, the Gothic arc configuration is preferable since it enables to have a large contact angle relative to the balls 9 and also to set a small axial gap in order to increase the rigidity against the axial load and to suppress vibration.

Oval bridge windows 13 are formed in a barrel of the nut 8 through a wall of the barrel by cutting out a portion of the screw groove 8a and a bridge member 14 also having an oval configuration is fitted in each of the bridge window 10. As shown in Fig. 2(b), the bridge member 14 is formed with a connecting groove 15 for connecting mutually adjacent screw grooves 8a. The connecting groove 12 and a substantially one circumferential length of the screw groove 8a form a ball rolling passage. A number of balls 9 arranged between the inner and outer screw grooves 7a and 8a within the ball rolling passage can roll along the screw grooves 7a and 8a, climb over a land of the screw groove 7a with being guided by the connecting groove 15 of the bridge member 14, then return to the adjacent screw groove 7a, and again roll along the screw grooves 7a and 8a.

The connecting groove 15 of the bridge member 14 is formed in a "S" curved configuration so as to smoothly connecting the adjacent screw grooves 8a of the nut 8. Accordingly, opposite opened edges 16 of the connecting groove 15 are adapted to be connected to the screw groove 8a of the nut 8 so that they can correspond to the opened edges of the bridge window 13 of the adjacent screw grooves 8a of the nut 8. The depth of the connecting groove 15 is set so that balls 9 can climb over the land of the screw groove 7a within the connecting groove 15.

The bridge member 14 may be made of sintered alloy formed by an injection machine with injecting plastically adjusted metal powder. In this injection molding process, firstly metal powder and binder comprising plastics and wax are kneaded by a kneading machine and then the kneaded material is pelletized. Obtained pellets are fed to a hopper of the injection machine and formed to the bridge member 14 by pressing heat melted pellets into a mold. The metal powder is preferably material able to be sintered such as that comprising "C" (carbon) of 0.3 wt% "Ni" (nickel) of 1 - 2 wt% and the remainder of "Fe". Other injection moldable material such as "PA" (polyamide) may be used for making the bridge member 14.

As shown in Fig. 1, the screw shaft 7 is supported by a pair of supporting bearings 10 and 11 rotatably but axially immovably relative to the housing 4. The nut 8 is provided a pair of supporting shafts 12 at an axially central position of the outer circumferential surface of the nut and perpendicularly to the axis of the screw shaft 7. Each of the shafts 12 rotatably supports one end of the link 2. Accordingly the nut 8 is supported axially movably but rotationally immovably.

The screw shaft 7 is rotated in accordance with rotation of the electric motor 5 and then the nut 8 is moved axially (left and right directions in Fig. 1) by the rotation of the screw shaft 7. That is, the rotary motion of the motor shaft 5a is converted to the axial motion of the nut 8 via the ball screw 3 and then the link 2 connected to the nut 8 via the supporting shaft 12 can be swingably moved.

The ball screw 3 is applied a predetermined light preload. That is, a larger diameter is selected for balls 9 contained between the screw groove 7a and 8a. Thus, it is possible to suppress generation of vibration or noise even if the alternating load or vibratory load would be applied to the ball screw 3. Other structures may be adopted as preload applying means other than selecting balls having a larger diameter, for example as the so-called "double nut type" in which the nut 8 is formed by a pair of nuts and a spacer as a gap adjuster is interposed between the pair of nuts, or as a type in which a preload is applied between the screw shaft 7 and the nut 8 by continuously varying the lead of the screw groove 7a of the screw shaft 7.

The screw shaft 7 is rotatably supported by a pair of supporting bearings 10 and 11. In the illustrated embodiment, one bearing 10 arranged at a side of the electric motor 5 is a double row angular ball bearing and the other bearing 11 arranged at the journal of the screw shaft 7 is a sliding bearing.

The supporting bearing 10 is the double row angular ball bearing comprising an outer ring 17 formed on its inner circumferential surface double row outer rolling contact surfaces, an inner ring 18 formed on its outer circumferential surface double row inner rolling contact surfaces, and double row balls 19 rollably contained between the outer and inner rolling contact surfaces. This supporting bearing 10 has a predetermined contact angle which has a loading capacity larger than that of conventionally used deep groove ball bearings and can suppress the angular run-out. This enables to suppress generation of vibration or noise even if the alternating load or vibratory load would be applied to the electrically driven linear actuator 1 in combination with the application of light preload to the ball screw 3.

On the other hand, the supporting bearing 11 is made of high carbon chrome steel such as SUJ2 and treated by dipping hardening. Since the supporting bearing 11 is formed by the sliding bearing and has high rigidity, it is possible to accept the elongation of the screw shaft which would be caused by temperature rise during driving of a vehicle and thus to absorb vibration or noise.

The screw shaft 7 is made of medium carbon steel such as S53C including carbon of 0.40 - 0.80wt% by weight and the screw groove 7a and the journal 20 of the screw shaft 7 are hardened by induction hardening to have desirable wear resistance. As shown in a partially enlarged view, a chamfered surface 21 is formed between the outer circumferential surface of the screw shaft 7 on which the screw groove 7a is formed and a journal 20 to be supported by the sliding bearing 11. It has an inclined surface 45° or less than 45°, preferably 20 - 40° relative to said outer circumferential surface of the screw shaft 7. A numeral 7b denotes an incomplete thread and a two-dot chain line in Fig. 3 denotes a configuration of blank of the screw shaft 7 before rolling of the screw groove 7a.

According to the preferred embodiment of the present invention, since the chamfered surface having a relatively small inclination is formed between the outer circumferential surface of the screw shaft 7 on which the screw groove 7a is formed and a journal 20, it is possible to reduce the difference in diameter of said outer circumferential surface of the screw shaft 7 and the journal 20. Accordingly, a single coil can be used both for induction hardening the screw groove 7a and the journal 20 and thus it is possible to reduce the steps of heat treatment and thus manufacturing cost. In addition, it is possible to ensure the surface hardness of the journal 20 of at least 50 HRC by setting the surface hardness of the screw groove 7a at 58 - 64 HRC.

If the chamfered surface between the outer circumferential surface of the screw shaft 7 on which the screw groove 7a is formed and the journal 20 is formed by an ordinal manner, a large difference in diameters is remained in them. Accordingly, the surface hardness of the journal 20 would be greatly reduced and cracks would be caused at corners of the screw shaft 7 by excessive heating due to concentration of eddy current in edges during induction hardening. However if the chamfering is carried out under the conditions defined by the present invention, generation of quench crack can be prevented and thus it is possible to continuously carry out the induction hardening without providing any quenching recess.

### Second embodiment

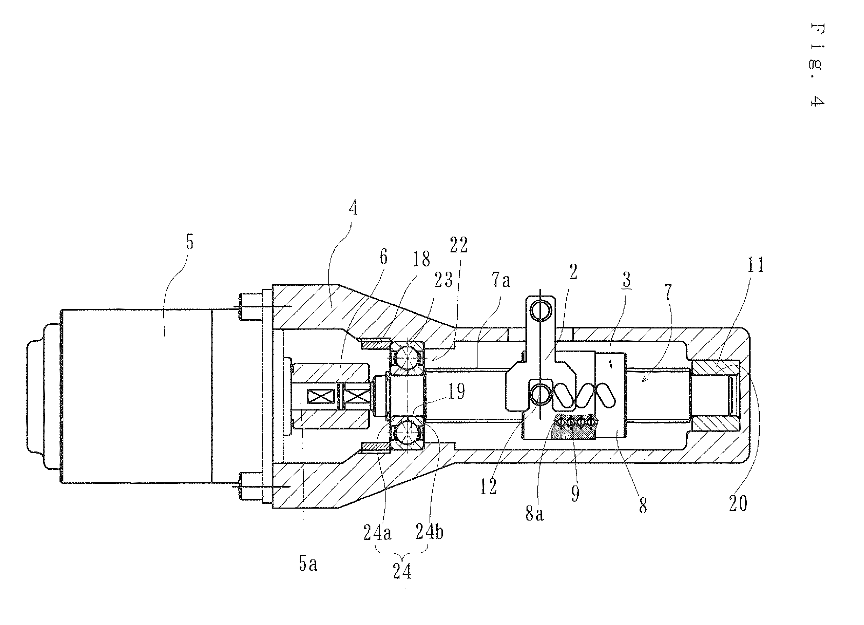

Fig. 4 is a longitudinal section view showing a second embodiment of the electrically driven linear actuator of the present invention. Since this embodiment is different from the first embodiment only in the structure of the supporting bearing, same reference numerals are used for designating similar parts in both embodiments.

The screw shaft 7 is supported by a supporting bearing 22 comprising a rolling bearing and a supporting bearing 11 comprising a sliding bearing rotatably but axially immovably relative to the housing 4. In this second illustrated embodiment, one bearing 22 arranged at a side of the electric motor 5 is a four-point contact ball bearing.

The four-point contact ball bearing 22 comprises an outer ring 23, an inner ring 24 including a pair of ring members 24a and 24b arranged with being abutted each other, and balls 19 rollably contained between the outer and inner rings 23 and 24.

The cross-sectional configuration of the rolling surface of the outer ring 23 is the so-called Gothic arc configuration formed by a pair of arcs having centers of curvature offset each other at equidistant in the axial direction relative to the center of width of the bearing. On the other hand, the cross-sectional configuration of the rolling surface of the inner ring members 24a and 24b is a circular arc having a predetermined radius of curvature and forms the rolling surface of Gothic arc configuration with cooperating each other.

According to the second embodiment of the present invention, since the supporting bearing 22 is the four-point contact ball bearing and the cross-sectional configuration of the rolling surface of the inner and outer rings is formed as the gothic arc, it is possible to support axial loads in either directions although it is a compact single row ball bearing and to reduce a range of axial gap relative to radial gap of the bearing. Accordingly, it is possible to suppress generation of vibration or noise even if the alternating load or vibratory load would be applied to the ball screw 3.

### Applicability in industry

The present invention can be applied to an electrically driven linear actuator in which a ball screw is coaxially connected to the shaft of an electric motor and adapted to convert the rotational motion of the motor to an axial motion of a nut engaging a screw shaft of the ball screw, and the screw shaft is supported by supporting bearings rotatably and axially immovably relative to a housing of the actuator.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. An electrically driven linear actuator (1) comprising:
an electric motor (5) mounted on a housing (4);
a screw shaft (7) coaxially connected to a motor shaft (5a) of the electric motor (5) and formed on its outer circumferential surface with a screw groove (7a);
a nut (8) threadably engaged with the screw shaft (7), having a pair of supporting shafts (12) on the outer circumferential surface of the nut (8) supporting one end of a link (2) and formed on its inner circumferential surface with a screw groove (8a) corresponding to the screw groove (7a) of the screw shaft (7);
a number of balls (9) contained between the screw grooves (7a and 8a);
ball circulating members (14) each being formed with an endless ball circulating passage (15) between the screw grooves (7a and 8a);
a ball screw (3) for converting a rotary motion of the electric motor (5) to an axial motion of the nut (8) and causing a swing motion of the link (2)via the supporting shafts (12); and
a pair of supporting bearings (10,11; 22,11) for supporting the screw shaft (7) rotatably but axially immovably relative to the housing (4);
**CHARACTERIZED in that** one supporting bearing (10, 22) arranged at a side of the electric motor (5) of each pair of the supporting bearing (10, 11; 22, 11) is an angular ball bearing and the other supporting bearing (11, 11) is a sliding bearing.

2. An electrically driven linear actuator of claim 1 wherein a light preload is applied to the ball screw (3).

3. An electrically driven linear actuator of claim 1 or 2 wherein the angular ball bearing (10, 22) is a double row angular ball bearing.

4. An electrically driven linear actuator of claim 1 or 2 wherein the angular ball bearing (10, 22) is a four-point contact ball bearing.

5. An electrically driven linear actuator of any one of claims 1 - 4 wherein a chamfered surface is formed between the outer circumferential surface of the screw shaft (7) on which the screw groove (7a) is formed and a journal (20) supported by the sliding bearing (11) as having an inclined surface 45° or less than 45° relative to said outer circumferential surface of the screw shaft (7).
